# EUROPÄISCHE PATENTANMELDUNG

(11) **EP 2 845 486 A1**
(43) Veröffentlichungstag der Anmeldung: **11.03.2015**
(21) Anmeldenummer: 14182535.6
(22) Anmeldetag: 27.08.2014
(51) Int. Cl.: A22C 15/00, A22C 17/10

(54) **Aufhängeschlaufen für Verpackungen**

(30) Priorität: 09.09.2013 DE 202013104090 U; 21.08.2014 DE 102014216677
(71) Anmelder: Herr Metallverarbeitung KG, 98574 Schmalkalden (DE); Flader, Carsten, 45770 Marl (DE)
(72) Erfinder: Flader, Carsten, 45770 Marl (DE); Herr, Erik, 36448 Schweina (DE)
(74) Vertreter: Kailuweit & Uhlemann Patentanwälte Partnerschaft mbB

(57) **Zusammenfassung**

Die Erfindung betrifft detektionsfähige magazinierte Aufhängeschlaufen für Verpackungen, insbesondere für schlauchförmige Verpackungen pastöser Massen oder für netzförmige Verpackungen fester Stoffe. Die Aufhängeschlaufen bestehen aus einem mehrfach verzwirnten oder verflochtenen Kunststoffgarn oder einem Kunststoffband. In und/oder auf dem Kunststoffgarn bzw. Kunststoffband sind polarisierbare Partikel enthalten bzw. aufgebracht. Diese polarisierbaren Partikel ermöglichen die zuverlässige Detektion auch von kleinen Teilen des Kunststoffgarnes bzw. des Kunststoffbandes in den verpackten Stoffen.

## Beschreibung

Die Erfindung betrifft detektionsfähige magazinierte Aufhängeschlaufen für Verpackungen, insbesondere für schlauchförmige Verpackungen pastöser Massen oder für netzförmige Verpackungen fester Stoffe.

Derartige Schlaufen sind aus dem Stand der Technik bekannt und werden zum Verschluss und/oder zur Aufhängungen von Verpackungen eingesetzt. Dabei wird die Verpackung entweder direkt mittels der verknoteten Schlaufe oder mit einem Verschlussclip verschlossen. Bei der Nutzung von Verschlussclips dient die Schlaufe lediglich der Aufhängung und ist über den Clip kraftschlüssig oder aber mittels separater Befestigung kraft-, form- und/oder stoffschlüssig mit der Verpackung verbunden. So ist auch das Ankleben oder Anschmelzen der Schlaufen an die Verpackung aus dem Stand der Technik bekannt.

Die Aufhänge- und/oder Verschlussschlaufen sind gewöhnlich aus mehrfach verzwirnten Kunststoffgarnen, bspw. aus Polypropylen, Polyamid, Polyester, Polyetheretherketon oder Polyoxymethylen gebildet. In der Wurstherstellung bestehen die Schlaufen häufig aus demselben Material wie die verwendeten Schlauchfolien, Kunstdärme oder Naturdärme, um eine Beschädigung der Verpackung beim Kontakt mit der Schlaufe zu verhindern.

Üblicherweise werden die Schlaufen den Verschluss- oder Clipmaschinen bereits abgelängt und einseitig verschlossen, vorzugsweise verknotet, zugeführt. Dabei sind sie auf einem ebenen Trägerband fixiert oder auf einem stab- oder ringförmigen Magazin aufgehängt.

Der Verschluss von schlauchförmigen Verpackungen pastöser Füllgüter, bspw. in der Wurstherstellung, aber auch das Anbringen von Schlaufen an netzförmige Verpackungen, bspw. an Räucherkäse, erfolgt heutzutage in hochgetakten Verschluss- oder Clipmaschinen mit pulsierenden Füllkräften sowie schnell bewegten Teilen. Die Maschinen selbst halten den hohen mechanischen Beanspruchungen in der Regel stand. Die eingesetzten Verpackungsmaterialien können jedoch sowohl bei der Zuführung als auch beim Befüll- und Verschlussvorgang beschädigt werden, wobei die Gefahr besteht, dass Teile der Verpackungsmaterialien in das Füllgut geraten. Dies ist gesundheitlich bedenklich und kann zu Beschädigungen an den eingesetzten Maschinen und zu Verletzungen auf Verbraucherseite führen.

Zur Lösung dieses Problems schlägt die DE 103 05 580 A1 eine Schlaufe mit Metalleinlage vor, die zum Verschluss einer Schlauchfolie bzw. einer Wursthülle aus Kunstdarm verwendet wird. Die Schlaufe ist aus 2- bis 8-fach gezwirntem Garn gebildet und weist weiterhin bis zu 10 eingezwirnte Metallfäden oder -drähte eines Durchmessers von 0,05 bis 0,3 mm auf. Durch den eingezwirnten Metallfaden soll das verwendete Garn somit über gängige Metalldetektoren detektiert werden können. Zudem soll ein Knoten dieser Schlaufe eine solche Verschlusssicherheit gewährleisten, dass das eingesetzte Garn sowohl für den Verschluss als auch für die Aufhängeschlaufe genutzt werden kann und ein Verschlussclip verzichtbar ist. Ursache dafür ist, die geringe Elastizität der genutzten Garne.

Die DE 20 2004 007 735 U1 schlägt vor, für das Abbinden von Wursthüllen ein Garn zu nutzen, in das ein oder mehrere Metallfäden eingearbeitet oder eingeflochten sind. Bevorzugt wird eine hohe Steifigkeit des vorgeschlagenen Garns, das insbesondere eine geringe Dehnung aufweisen soll. Als besonderer Vorteil wird hervorgehoben, dass eine zusätzliche Verclippung zum Verschluss der Wursthüllen nicht erforderlich ist.

Nachteilig an dieser Lösung ist jedoch, dass die vorgeschlagenen Garne mit Metallfäden zu einem erhöhten Verschleiß der zum Ablängen des Garns benutzten Schneidmittel führen. Zudem besteht aufgrund abweichender Materialeigenschaften von Metall und Kunststoff die Gefahr eines Auskragens oder sogar des Ablösens des Metallfadens aus dem Kunststoffgarn nach dem Ablängen. Dies resultiert, gerade entgegen der gestellten Aufgabe, in einer erhöhten Verschmutzungsgefahr der Lebensmittel bzw. Verletzungsgefahr auf Verbraucherseite.

Die Aufgabe der vorliegenden Erfindung ist es daher detektionsfähige Aufhängeschlaufen für Verpackungen vorzuschlagen, die eine verunreinigungsfreie Verarbeitung, insbesondere beim Ablängen des Garns, sowie eine hohe Detektionsfähigkeit gewährleisten. Weiterhin soll ein Trägersystem für derartige Aufhängeschlaufen vorgeschlagen werden, mit dem die Gefahr unerkannter Kontamination von Lebensmitteln weiter minimiert wird.

Diese Aufgabe wird gelöst durch eine Schlaufe mit den Merkmalen des Hauptanspruchs sowie den Verwendungsansprüchen 8 und 9, vorzugsweise Weiterbildungen sind Gegenstand der jeweils rückbezogenen Unteransprüche.

Die erfindungsgemäße Aufgabe wird gelöst durch eine Aufhängeschlaufe (Schlaufe), bestehend aus einem mehrfach verzwirnten oder verflochtenen Kunststoffgarn oder einem Kunststoffband, wobei polarisierbare Partikel in dem Kunststoff enthalten und/oder auf den Kunststoff aufgetragen sind. Unter "polarisierbar" wird das Vorhandensein einer elektrischen und/oder magnetischen Polarisierbarkeit verstanden.

Zur Ausbildung der Schlaufe aus Kunststoffgarn werden bevorzugt 2 bis 8 Fäden des Garns miteinander zu einem (Endlos-) Faden verzwirnt oder verflochten. Bei der Ausbildung der Schlaufe aus einem Kunststoffband wird der Kunststoff bevorzugt bandförmig strang- oder blasextrudiert oder eine derart extrudierte Kunststofffolie zu einem Band gefaltet. Das verzwirnte oder verflochtene Kunststoffgarn oder das Kunststoffband werden zur Ausbildung der Schlaufe auf eine gewünschte Länge abgelängt und die losen Enden anschließend verbunden, bevorzugt verknotet, und die Schlaufe somit einseitig verschlossen.

Erfindungsgemäß sind im Kunststoff polarisierbare Partikel enthalten, die bevorzugt vereinzelt oder in Form kleinerer Agglomerate (weniger als 50 Partikel) vorliegen. Die polarisierbaren Partikel liegen ohne Fernordnung in dem Kunststoff vor. Die Partikel weisen jedoch eine weitgehend konstante Partikeldichte in dem Kunststoff auf. Dabei wird die Gleichmäßigkeit der Verteilung der polarisierbaren Partikel in dem Kunststoff durch ausreichendes Dispergieren des Kunststoffs und den beigemischten Partikeln erreicht.

Erfindungsgemäß sind alternativ oder kumulativ polarisierbare Partikel auf die Oberfläche des Kunststoffgarns, des Kunststoffbandes oder der einseitig geschlossenen Schlaufe aufgetragen. Dies geschieht vorzugsweise durch eine Lackierung der Schlaufe mit einer Formulierung, enthaltend polarisierbare Partikel. Diese Partikel sind in der Formulierung vorzugsweise in einem flüchtigen Lösungsmittel und gegebenenfalls einer Klebstoff- oder Lackkomponente suspendiert. Die Konzentration der Partikel ist dabei derart, dass durch einoder mehrfache Benetzung der Schlaufenoberfläche so viele Partikel an dieser anhaften, dass eine Detektionsfähigkeit der Schlaufe gegeben ist.

Die Polarisierbarkeit der Partikel ist in Ihrer Gesamtheit derart, dass die erfindungsgemäße Aufhängeschlaufe vorteilhaft mit gängigen Metalldetektoren detektierbar ist. Dabei kann die Detektierbarkeit der Schlaufe über die Erhöhung der Polarisierbarkeit der Einzelpartikel oder der zugemischten Partikelmenge verbessert werden. Besonders bevorzugt ist die Polarisierbarkeit der Schlaufe derart, dass auch einzelne Teile der Schlaufe in gängigen Metalldetektoren sicher detektiert werden können.

Die erfindungsgemäße Aufhängeschlaufe ermöglicht vorteilhaft die Überwachung eines Verpackungsprozesses hinsichtlich der Verschmutzung der zu verpackenden Güter mit Teilen der Schlaufe oder ganzen Schlaufen. Dies erfolgt vorteilhaft mittels gängiger und einfach in den Prozess zu integrierender Metalldetektoren. Bereits bei der Herstellung der Schlaufen aus einem (Endlos-)Kunststoffgarn kommt es, im Vergleich zum Stand der Technik, vorteilhaft zu einem geringeren Verschleiß der eingesetzten Schneidmittel. Weiterhin vorteilhaft weisen die Schneidkanten des Kunststoffgarns keine auskragenden Teile und weitgehend glatte Schnittflächen auf. Somit wird eine Beschädigung der Schlauchfolie oder des Darms, die als Verpackung dienen, vorteilhaft vermieden.

In einer bevorzugten Ausführungsform enthält der Kunststoff polarisierbare Partikel einer Größe von 50 nm bis 1 mm, besonders bevorzugt von 0,5 µm bis 0,5 mm und ebenfalls bevorzugt zwischen 0,05 mm und 0,5 mm. Das nahezu homogene Einbringen von polarisierbaren Partikeln dieser Größe in einen Kunststoff ermöglicht vorteilhaft ein Optimum hinsichtlich Detektionsfähigkeit, Schneidbarkeit und der Menge der benötigten Partikel. In einer ebenfalls bevorzugten Ausführungsform werden auf die Partikel mit einer Größe von 50 nm bis 0,5 mm, besonders bevorzugt von 50 nm bis 50 µm und ebenfalls bevorzugt von 50 nm bis 1 µm auf die Oberfläche des Kunststoffgarns, des Kunststoffbandes oder der einseitig geschlossenen Schlaufe aufgetragen. In diesem Größenbereich ist eine maximale Anhaftung der Partikel aufgrund von Adhäsion bzw. molekularen Wechselwirkungen gegeben.

Die Partikel weisen dabei in einer ersten bevorzugten Ausführungsform eine annähernd kugelförmige oder auch unregelmäßig n-eckige Form auf, wobei die angegeben Größen sich auf den Äquivalenzdurchmesser, insbesondere den volumenäquivalenten Kugeldurchmesser beziehen, der auf bekannte Art mittels Siebung und Fraktionierung oder durch Sedimentationsanalysen bestimmbar ist. Insbesondere sind die polarisierbaren Partikel in dieser Ausführungsform nicht als Metallfäden oder ähnliche ausgeprägt längserstreckte Gebilde ausgeführt, da dies nachteilig zu einem verstärkten Verschleiß der Schneidwerkzeuge beim Ablängen führt.

Ebenfalls bevorzugt sind Metallpartikel als polarisierende Partikel in dem Kunststoffgarn enthalten. Metalle, insbesondere rostfreiere Stahl, weisen vorteilhaft eine hohe Polarisierbarkeit sowie eine gute Verarbeitbarkeit- und Verfügbarkeit auf. Vorteilhaft werden zur Herstellung des Kunststoffgarns Metall- und Kunststoffgranulat vermischt, der Kunststoff aufgeschmolzen und die entstandene Suspension extrudiert.

In einer weiteren bevorzugten Ausführungsform sind als polarisierbare Partikel Metallfasern mit einer Länge zwischen 0,05 bis 5 mm, ebenfalls bevorzugt von 0,1 bis 3 mm, enthalten. Die Fasern weisen dabei ein Verhältnis von Länge zu Durchmesser (bzw. zu Dicke und Breite) von mindestens 3:1, bevorzugt von mindestens 10:1 und besonders bevorzugt von mindestens 50:1 auf. Dies ermöglicht vorteilhaft die Herstellung detektionsfähigen Kunststoffgarns aus blasextrudierten Kunststofffolien durch Abtrennung einzelner Folienbänder und deren Verdrillung. Besonders vorteilhaft erfolgt bei der Blasextrusion ein Einregeln der längsausgedehnten Metallfasern in die Folienebene. Somit ist wird vorteilhaft ein hoher Metallanteil in der Folie und eine hohe Detektionsfähigkeit der Schlaufen realisierbar, wobei die Gefahr des Auskragens der Metallfäden aus der Folie minimal ist.

Besonders bevorzugt enthält das Kunststoffgarn polarisierbare Partikel mit einem Gewichtsanteil von 1 bis 50 Gew.-%, bevorzugt zwischen 5 und 40 Gew.-% und besonders bevorzugt zwischen 10 und 30 Gew.-%. Somit ist vorteilhaft eine gute Verarbeitbarkeit des Kunststoffgarns sowie eine hohe Detektionsfähigkeit der Schlaufen bzw. Schlaufenteile realisierbar. Insbesondere bei hohen Gewichtsanteilen sind vorzugsweise Partikel mit geringen Partikelgrößen, insbesondere kleiner 0,5 mm, zu verwenden, um eine gute Vernetzung des Kunststoffs und somit eine hohe stoffliche Integrität des Kompositmaterials zu gewährleisten.

Die polarisierbaren Partikel sind vorzugsweise stochastisch in das Garn eingeregelt, wobei sich deren Verteilung durch das Mischen von Kunststoff- und Metallgranulat sowie das Dispergieren der in der Kunststoffschmelze enthaltenen Metallpartikel einstellt. Über eine intensive Mischung der Kunststoff- und der Metallkomponente ist somit ein Kunststoffgarn mit gleichmäßiger Polarisierbarkeit herstellbar, dass aufgrund der regelmäßigen Verteilung der Metallpartikel eine gute Abtrennbarkeit des Garns gewährleistet.

Weiterhin bevorzugt enthält das Kunststoffgarn Aramidfasern, Kohlefasern, Leitruße oder Grafite. Mit zusätzlich zu den polarisierbaren Partikeln vorliegenden Aramid- und Kohlefasern können vorteilhaft die mechanischen Eigenschaften der Schlaufen verbessert werden. Insbesondere durch Kurzfaserverstärkung ist einer Erhöhung der Reißfestigkeit der Schlaufen bei gleichbleibend guter Schneidbarkeit möglich. Durch die weiterhin bevorzugte Zugabe von Leitrußen, Grafiten oder Kohlefasern, als polarisierbare oder zusätzliche Partikel, ist eine höhere Leitfähigkeit des Kunststoffgarns einstellbar. Somit kann vorteilhaft dessen Impedanz zur Detektion der Schlaufen, insbesondere an Haltemitteln oder im Magazin, genutzt werden. Ebenfalls bevorzugt sind im Kunststoffgarn antistatisch oder antibakteriell wirkende Partikel oder Fasern, besonders bevorzugt Silberoxid-Partikel, eingebracht. Vorteilhaft kann so das Eigenschaftsprofil der Schlaufen an in der Lebensmitteltechnik herrschende Anforderungen angepasst werden.

Als Kunststoffkomponente werden, je nach gewünschtem Eigenschaftsprofil, bevorzugt alle in der Lebensmitteltechnik verwendeten Kunststoffe eingesetzt. Besonders bevorzugt ist die Kunststoffkomponente der Aufhänge- und Verschlussschlaufe aus PPA, PPS, PES, PEI, PEEK, PEEK-HT, I PC, PBT, PET, PA 6.6 und/oder PA 4.6 gebildet.

Ebenfalls Gegenstand der Erfindung ist die Verwendung eines detektionsfähigen Kunststoffs zur Herstellung von Schlaufen für die Aufhängung und/oder zum Verschluss schlauch- oder netzförmiger Verpackungen. Detektionsfähige Kunststoffe sind dabei Kunststoffe die mittels gängiger Metalldetektoren elektrisch oder magnetisch oder mittels Röntgenspektroskopie detektierbar sind. Dazu werden vorzugsweise Kunststoffe eingesetzt, die elektrisch polarisierbare oder magnetisierbare Partikel enthalten. Derartige Kunststoffe sind aus dem Stand der Technik zur Herstellung von Prozessmaschinen, auch aus der Lebensmitteltechnik, bekannt. Die Verwendung derartiger Kunststoffe für Schlaufen zum Aufhängen schlauchförmiger Verpackungen pastöser Massen oder netzförmiger Verpackungen fester Stoffe ermöglicht vorteilhaft die Detektion von Verpackungsteilen im Endprodukt und somit eine effiziente Qualitätskontrolle. Weiterhin vorteilhaft kann die Detektionsfähigkeit der Schlaufen zur Prozesskontrolle, bspw. für Zählwerke, genutzt werden. Als besonders vorteilhaft ist anzusehen, dass die polarisierbaren Partikel, die die Detektionsfähigkeit gewährleisten, im gesamten Material der Schlaufe dispergiert sind. Während in ein Garn nach dem Stand der Technik integrierte Metallfäden, zwar selbst detektierbar sind, wird das Garn nach dem Ablösen der Metallfäden nicht mehr erkannt und kann daher irrtümlich im Produkt verbleiben. Demgegenüber sind auch kleine Abschnitte oder Teilstücke der erfindungsgemäßen Schlaufe mittels Metalldetektor oder eines anderen, die Polarisierbarkeit des Schlaufenmaterials ausnutzenden Gerätes erkennbar.

Ebenfalls Gegenstand der Erfindung ist die Verwendung eines detektionsfähigen Kunststoffs zur Herstellung von ebenen Trägerbändern für die Aufnahme einer Vielzahl von Aufhängeschlaufen. Die Aufhängeschlaufen werden den Verschluss- oder Clipmaschinen bereits abgelängt und einseitig verschlossen, vorzugsweise verknotet, zugeführt. Dabei sind sie in der Regel auf einen ebenen Trägerband thermisch oder mittels Ultraschall und beabstandet zueinander fixiert. In der Verschluss- oder Clipmaschine wird die vorgefertigte Schlaufe von dem Trägerband abgenommen und über den Clip oder unabhängig von diesem an der Verpackung befestigt. Dabei besteht die Gefahr, dass Teile des Trägerbandes mitgerissen und in das zu verpackende Produkt eingebracht werden. Vorteilhaft ist daher auch das Trägerband aus detektionsfähigem Kunststoff gebildet, um ein etwaig verschmutztes Produkt detektieren und aussortieren zu können. Bevorzugt ist dabei die Zusammensetzung des Trägerbandes zur Zusammensetzung der erfindungsgemäßen Aufhängeschlaufe identisch.

Weiterhin Gegenstand der Erfindung ist die Verwendung eines detektionsfähigen Kunststoffs zur Herstellung von Rollenkernen für das Aufwickeln des Trägerbandes. Aus denselben Gründen, wie hinsichtlich des Trägerbandes aufgeführt, ist eine Detektionsfähigkeit des Rollenkerns vorteilhaft für die Qualitätskontrolle in Verpackungsprozessen. Insbesondere beim vollständigen Abwickeln des Trägerbandes vom Spulenkern besteht die Gefahr eines Abrisses des Trägerbandes vom Spulenkern und einer Verschmutzung des Verpackungsgutes. Durch die Verwendung eines detektionsfähigen Kunststoffs werden auch derart verschmutzte Produkte detektiert und aussortiert.

Besonders bevorzugt werden zur Herstellung der erfindungsgemäßen Aufhängeschlaufen und Trägerbänder aus detektionsfähigem Kunststoff blasextrudierte Folien als Ausgangsstoff verwendet. Die Folien enthalten dabei vorzugsweise in die Folienebene eingeregelte Metallfasern als polarisierbare Partikel. Das Kunststoffgarn wird durch Vereinzelung der Folienbahn in Folienstreifen sowie deren Verdrillung erzeugt. Die als Kunststoffband ausgebildeten Aufhängeschlaufen werden, in Abhängigkeit der Dicke der blasextrudierten Folien, durch Vereinzelung und gegebenenfalls durch Falten der Folie auf die gewünschte Dicke erzeugt. Das Trägerband wird bevorzugt durch Vereinzelung der Trägerfolie in einzelne Folienbahnen erzeugt, wobei gegebenenfalls auch zur Herstellung einer ausreichend stabilen Trägerfolie einige Faltungen der blasextrudierten Folien erfolgen. Besonders bevorzugt werden blasextrudierte Folien aus detektionsfähigem Kunststoff auch zur Herstellung schlauchförmiger Verpackungen selbst eingesetzt, sofern diese nicht für den Verzehr vorgesehen sind. Vorteilhaft können somit blasextrudierte Folien aus detektionsfähigem Kunststoff in mehrfacher Weise als Ausgangsstoff für den Verpackungsprozess eingesetzt werden.

In einer bevorzugten Ausführungsform wird Garn mittels in Kunststoffgranulat eingearbeiteter polarisierender gemahlener Partikel (magnetisiertes Eisenoxid) hergestellt. Das magnetisierte Eisenoxid wird in feinste Partikel gemahlen und dem Kunststoffgranulat vor der Bandextrusion der Fäden zugesetzt. Überraschend wurde herausgefunden, dass sich das daraus hergestellte Garn elektromagnetisch bespielen bzw. kodieren lassen und zwar ähnlich wie die Tonbänder früherer Audio-oder Videokasetten. Dies lässt sich vorteilhaft bspw. für eine automatischen Chargenverfolgung oder die Erkennung von Schlaufenlängen und Farben oder zum Zählen nutzen. Prinzipiell sind alle wünschenswerten Informationen in der magnetisch bespiel- und auslesbaren Schlaufe speicherbar. Ferner wurde überraschend festgestellt, dass sich die so gewonnen erfindungsgemäßen Schlaufen mittels Magneten in gewünschte Positionen bringen lassen. Dies ermöglicht große Vorteile beim Maschinenbau, zum Beispiel zum Abbremsen, Zählen oder Führen der Schlaufen ohne Trägerband oder zur Aufnahme weiterer Informationen.

## Patentansprüche

1. Aufhängeschlaufe für Verpackungen, bestehend aus
a) einem mehrfach verzwirnten oder verflochtenen Kunststoffgarn oder
b) einem Kunststoffband, **dadurch gekennzeichnet, dass** polarisierbare Partikel
i. in dem Kunststoff enthalten und/oder
ii. auf den Kunststoff aufgebracht sind.

2. Aufhängeschlaufe nach Anspruch 1, **dadurch gekennzeichnet, dass** der Kunststoff Partikel einer Größe von 50 nm bis 1 mm enthält.

3. Aufhängeschlaufe nach Anspruch 1, **dadurch gekennzeichnet, dass** das Kunststoffgarn Partikel in Form von Metallfasern einer Länge zwischen 0,05 mm bis 5 mm enthält.

4. Aufhängeschlaufe nach einem der Ansprüche 1 bis 3, **dadurch gekennzeichnet,** das Kunststoffgarn Partikel mit einem Anteil von 5 bis 50 Gew.-% enthält.

5. Aufhängeschlaufe nach einem der vorangehenden Ansprüche, **dadurch gekennzeichnet, dass** die Partikel stochastisch in das Garn eingeregelt sind.

6. Aufhängeschlaufe nach einem der vorangehenden Ansprüche, **dadurch gekennzeichnet, dass** das Kunststoffgarn Aramidfasern, Kohlefasern, Leitruße oder Grafite enthält.

7. Aufhängeschlaufe nach einem der vorangehenden Ansprüche, **dadurch gekennzeichnet, dass** der Kunststoffanteil des Kunststoffgarn aus PPA, PPS, PES, PEI, PEEK, PEEK-HT, I PC, PBT, PET, PA 6.6 oder PA 4.6.

8. Aufhängeschlaufe nach einem der vorhergehenden Ansprüche, **dadurch gekennzeichnet, dass** die polarisierbaren Partikel aus magnetisiertem Eisenoxid bestehen.

9. Aufhängeschlaufe nach Anspruch 8, **dadurch gekennzeichnet, dass** im Material der Aufhängeschlaufe magnetisch Informationen zur Verpackung oder zum Produkt gespeichert sind.

10. Verwendung eines detektionsfähigen Kunststoffs zur Herstellung von Schlaufen für die Aufhängung schlauch- oder netzförmiger Verpackungen.

11. Verwendung eines detektionsfähigen Kunststoffs zur Herstellung von ebenen Trägerbändern für die Aufnahme einer Vielzahl von Aufhängeschlaufen und zur Herstellung von Rollenkernen für das Aufwickeln des Trägerbandes.

12. Verwendung eines detektionsfähigen Kunststoffs nach einem der Ansprüche 10 und 11, **dadurch gekennzeichnet, dass** zur Herstellung der Schlaufen und Trägerbänder blasextrudierte Folien als Ausgangsstoff verwendet werden.
